# EUROPÄISCHE PATENTSCHRIFT

(11) **EP 3 977 843 B1**
(45) Veröffentlichungstag und Bekanntmachung des Hinweises auf die Patenterteilung: **09.10.2024**
(21) Anmeldenummer: 21190501.3
(22) Anmeldetag: 10.08.2021
(51) Int. Cl.: A01F 15/08, A01D 69/08

(54) **LANDWIRTSCHAFTLICHE QUADERBALLENPRESSE**
AGRICULTURAL SQUARE BALER
PRESSE AGRICOLE À BALLES CARRÉES

(30) Priorität: 30.09.2020 DE 102020125541
(43) Veröffentlichungstag der Anmeldung: 06.04.2022
(73) Patentinhaber: Usines CLAAS France S.A.S, 57140 St. Rémy / Woippy (FR)
(72) Erfinder: Rongvaux, Laurent, 54800 Tronville (FR); Arnould, Cyrille, 57645 Montoy-Flanville (FR)
(74) Vertreter: CLAAS Gruppe

(56) Entgegenhaltungen:
- EP-A1- 1 974 601
- EP-A1- 3 366 110
- EP-A1- 3 646 718
- DE-A1- 102005 029 405
- US-A1- 2011 238 269

## Beschreibung

### TECHNISCHES GEBIET DER ERFINDUNG

Die Erfindung betrifft eine landwirtschaftliche Quaderballenpresse zur Verarbeitung von Erntegut zu quaderförmigen Ballen gemäß dem Oberbegriff des Patentanspruchs 1.

### TECHNISCHER HINTERGRUND DER ERFINDUNG

Bei einer landwirtschaftlichen Ernte fallen üblicherweise große Mengen restlichen Ernteguts an die auf einem jeweilig bearbeiteten Feld abgelegt werden. Das abgelegte Erntegut, beispielsweise Heu oder Stroh, liegt lose vor. Es ist unwirtschaftlich, das Erntegut in seinem losen Zustand aufzunehmen, zu transportieren beziehungsweise zu lagern, da das lose Erntegut eine geringe Dichte aufweist und somit ein großes Volumen einnimmt. Aus wirtschaftlicher Sicht ist es daher vorteilhaft, das Erntegut zunächst zu verdichten, insbesondere zu Ballen zu pressen. Dies wird mittels landwirtschaftlicher Ballenpressen bewerkstelligt, die insbesondere in Form von Rundballenpressen und Quaderballenpressen weitlich zum Einsatz kommen.

### STAND DER TECHNIK

Der EP 3 400 786 A1 ist eine landwirtschaftliche Ballenpresse, insbesondere in Form einer Quaderballenpresse, zur Verarbeitung und/oder Förderung von Erntegut als bekannt zu entnehmen. Die Ballenpresse umfasst ein Arbeitsaggregat, mittels dessen das Erntegut verarbeitet beziehungsweise gefördert werden kann. Außerdem weist die Ballenpresse einen Antriebsstrang auf, mittels dessen das Arbeitsaggregat angetrieben werden kann. Des Weiteren ist dem Antriebsstrang mindestens ein Energiespeicher zugeordnet, der erfindungsgemäß ein variables Trägheitsmoment aufweist. Weitere landwirtschaftliche Ballenpressen zur Verarbeitung und/oder Förderung von Erntegut sind aus der EP 3 366 110 A1, der DE 10 2005 029 405 A1 und der US 2011/238269 A1 bekannt.

Die bekannte Ausgestaltung ist insoweit nachteilig, als insbesondere ein Start der landwirtschaftlichen Ballenpresse kompliziert ist und hohe Materialbeanspruchungen verursachen kann.

### Dies ergibt sich aus folgenden Gründen:

### TECHNISCHE AUFGABE DER ERFINDUNG

Aufgrund von Entwicklungen und Verbesserungen sind heutige landwirtschaftliche Quaderballenpressen besonders groß und leistungsstark geworden. Dementsprechend sind auch Komponenten des zugehörigen Antriebs besonders groß und leistungsstark geworden. Dies betrifft insbesondere einen Hauptverdichterkolben, mittels dessen die wesentliche Verdichtung des Ernteguts bewerkstelligt wird. Zur Aufbringung der wunschgemäß hohen Verdichtungsleistung bei der Erstellung großer Ballen sind an dem zugehörigen Kolbenantrieb besonders hohe Drehmomentspitzen zu überwinden. In Zusammenhang damit ist das Schwungrad des Antriebsstrangs bekannter Quaderballenpressen mit der Zeit immer größer und schwerer geworden, sodass es ein besonders großes Massenträgheitsmoment aufweist und auf diese Weise zur Überwindung der genannten Drehmomentspitzen verhelfen kann. Das Anwachsen der Schwungräder bekannter Quaderballenpressen hat zur Folge, dass beim Start der Quaderballenpresse eine besonders große Beschleunigungsenergie erforderlich ist, um das Massenträgheitsmoment zu überwinden und somit das Schwungrad zu beschleunigen. Die Antriebleistung des Nebenantriebs der Arbeitsmaschine reicht dabei nicht immer aus, um den Antriebsstrang mitsamt dem Schwungrad zu beschleunigen. Insbesondere kann es vorkommen, dass der Nebenantrieb der Arbeitsmaschine kein ausreichend großes Drehmoment erzeugen kann, um den Antriebsstrang der Quaderballenpresse initial anzutreiben. Auch kann es vorkommen, dass der Bedarf an Drehmoment während des Betriebs der Quaderballenpresse die Leistungsfähigkeit des Nebenantriebs der Arbeitsmaschine übersteigt und die Arbeitsmaschine regelrecht von der Quaderballenpresse "abgewürgt" wird. Ein solcher durch die Quaderballenpresse erzwungener Stopp der Arbeitsmaschine kann für die Arbeitsmaschine schädlich sein und einen hohen Verschleiß mit sich bringen.

Neben einer Beschleunigung des Schwungrades wird die erforderliche Antriebsleistung beziehungsweise das erforderliche Drehmoment im Wesentlichen durch die Arbeitsorgane der Quaderballenpresse, welche im Folgenden beschrieben werden, bestimmt.

Ein Arbeitsorgan der Quaderballenpresse ist von der sogenannten Pickup gebildet, die typischerweise einen Rotor mit einer Vielzahl von Zähnen aufweist. Jeweils zwischen den Zähnen kann ein Schneidwerk, insbesondere ein Messer, angeordnet sein. Mittels der Pickup werden auf einem Feld aufliegende Pflanzenreste aufgenommen und zur weiteren Verarbeitung an nachgeschaltete Arbeitsorgane der Quaderballenpresse weitergeleitet. Die Pflanzenreste bilden fortan das Erntegut. Das zum Antreiben der Pickup erforderliche Drehmoment hängt beispielsweise von dem Erntegut, einer Arbeitsgeschwindigkeit, einer Anzahl und einem Zustand der Messer ab. Das Drehmoment der Pickup schwankt während eines Betriebes und kann insbesondere in einem Bereich zwischen 400 Nm und 1400 Nm liegen. Vorteilhafterweise verhindert ein Überlastschutz ein Ansteigen des Drehmoments auf über 1800 Nm.

Der Pickup nachgeschaltet ist ein weiteres Arbeitsorgan in Form einer Komprimiereinrichtung, mittels welcher das Erntegut verdichtet wird. Die Komprimiereinrichtung weist eine quaderförmige Kammer auf, deren Längsausdehnung sich in Längsrichtung der Quaderballenpresse erstreckt. Außerdem umfasst die Komprimiereinrichtung einen Hauptverdichterkolben, der in der Kammer entlang deren Längsausdehnung zyklisch hin und her bewegt wird. Hierbei entspricht ein Querschnitt des Hauptverdichterkolbens im Wesentlichen einem Querschnitt der Kammer, derart, dass der Hauptverdichterkolben in der Kammer hin und her bewegt werden kann. Der Hauptverdichterkolben wird dabei vorzugsweise im Wesentlichen über eine gesamte Länge der Kammer bewegt. Das in die Kammer eingeführte Erntegut wird mittels des Hauptverdichterkolbens verdichtet, und zwar derart, dass der Hauptverdichterkolben das Erntegut entlang der Längsausdehung der Kammer vor sich herschiebt und gegen das bereits verdichtete Erntegut, welches bereits zuvor an einem distalen Wendepunkt der zyklischen Kolbenbewegung angesammelt wurde, presst. Mit anderen Worten erfasst der Hauptverdichterkolben das Erntegut in der Kammer und schiebt beziehungsweise presst das Erntegut gegen das bereits zuvor verdichtete Erntegut.

Der Hauptverdichterkolben durchläuft demnach im Wesentlichen zwei Zyklen. In einem ersten Zyklus verdichtet der Hauptverdichterkolben das Erntegut ("Presszyklus"). In einem zweiten Zyklus wird der Hauptverdichterkolben entlang der Längsausdehnung der Kammer von dem verdichteten Erntegut wegbewegt ("Ausholzyklus"). Während des Presszyklus steigt das benötigte Drehmoment kontinuierlich an, weil der Hauptverdichterkolben das Erntegut zunehmend verdichtet und dafür immer mehr Kraft aufwenden muss. Der Presszyklus ist beendet, wenn der Hauptverdichterkolben eine maximale Auslenkung erreicht hat ("Pressstellung"). Bei Vorliegen in dieser Pressstellung, bei deren Vorliegen der Hauptverdichterkolben in Längsrichtung bis an das Ende der Kammer ausgelenkt ist, ist das Erntegut maximal verdichtet und ein Höchstwert des benötigten Drehmoments erreicht. Der Höchstwert kann in Abhängigkeit von Faktoren, wie beispielsweise einem Verdichtungsgrad oder dem Erntegut, beispielsweise 6000 Nm betragen.

Außerdem kann ein Arbeitsorgan der Quaderballenpresse von einem Raffer gebildet sein. Der Raffer ist der Pickup nachgeschaltet und greift typischerweise das Erntegut mittels eines Rechens, verdichtet es in einer Vorkammer vor und führt es sodann der Kammer zu. Auf diese Weise werden der Kammer sukzessive einzelne, vorverdichtete Erntegutpakete zugeführt, die fortwährend mittels des Hauptverdichterkolbens der Komprimiereinrichtung erfasst und weiter verdichtet werden. Das für den Raffer benötigte Drehmoment schwankt periodisch und erreicht den Höchstwert, während der Rechen das Erntegut in der Vorkammer zusammendrückt beziehungsweise komprimiert. Der Höchstwert kann in Abhängigkeit von den Faktoren, wie beispielsweise dem Verdichtungsgrad oder dem Erntegut, beispielsweise 1400 Nm betragen.

Das Erntegut verlässt die Kammer im Wesentlichen in Form eines Quaders. Um den Quader nach Verlassen der Quaderballenpresse in Form zu halten, ist es weiterhin besonders von Vorteil, wenn ein weiteres Arbeitsorgan der Quaderballenpresse von einer der Kammer nachgeschalten Bindeeinrichtung gebildet ist, mittels der der Quader mit einem Garn umbunden wird. Dazu wird das Garn um den Quader herum gelegt und verknotet. Das für die Bindeeinrichtung benötigte Drehmoment beträgt in Abhängigkeit von den Faktoren, wie beispielsweise dem Verdichtungsgrad oder dem Erntegut, beispielsweise maximal 200 Nm.

Ein zum Betreiben der landwirtschaftlichen Quaderballenpresse erforderliches Gesamtdrehmoment ergibt sich im Maximum aus einer Summe aller Drehmomente der einzelnen Arbeitsorgane. Um Spitzen des Gesamtdrehmoments zu reduzieren, weist der Antriebsstrang das Schwungrad auf, wodurch beispielsweise der Höchstwert des Gesamtdrehmoments im Wesentlichen halbiert werden kann. Der Höchstwert des Gesamtdrehmoments kann entsprechend beispielsweise 3500 Nm betragen.

Selbst mit Einsatz des Schwungrades kann das damit effektiv über den Nebenantrieb der Arbeitsmaschine zur Verfügung zu stellende Gesamtdrehmoment mit einem Höchstwert der genannten beispielsweise 3500 Nm ein Problem darstellen. Dies gilt auch unabhängig von einer Betriebssituation, in der ein solches maximales Drehmoment anfallen kann, in einer Startsituation. Bei einem Start der Kombination aus Arbeitsmaschine und Quaderballenpresse ist nämlich ein "Startdrehmoment" von der Arbeitsmaschine aufzubringen, um die Quaderballenpresse in Betrieb zu nehmen. Der Start der Quaderballenpresse ist zwar in aller Regel lastfrei, sodass die vorstehend beschriebenen Maxima der einzelnen Arbeitsorgane mutmaßlich nicht oder zumindest nicht alle gleichzeitig überwunden werden müssen. Allerdings steht das Schwungrad beim Start der Quaderballenpresse still und muss ebenfalls beschleunigt werden. Aufgrund der hohen maximalen Drehmomente und der damit einhergehend großen Dimensionierung heute üblicher Schwungräder, ist der Aufwand an Energie zur Beschleunigung des Schwungrades mitunter sehr hoch. Im Ergebnis kann dies dazu führen, dass größere Quaderballenpressen nur noch von sehr leistungsstarken Arbeitsmaschinen gestartet werden können (Leistungsklasse > 250 PS), da nur solche Arbeitsmaschinen in der Lage sind, die Quaderballenpresse über den Nebenantrieb zuverlässig zu starten und zu betreiben, ohne dass es zu einer Überlastung der Arbeitsmaschine kommt.

Um den Startvorgang solcher Quaderballenpressen zu unterstützen, ist es aus der EP 1 974 601 A1 und der EP 3 646 718 A1 bekannt, zusätzliche Anlaufeinrichtungen, beispielsweise in Gestalt eines Wandlers oder eines mehrstufigen Getriebes, an den Quaderballenpressen vorzusehen.

Aufgabe der vorliegenden Erfindung ist, eine landwirtschaftliche Quaderballenpresse der eingangs genannten Art derart weiterzuentwickeln, dass ein sicherer Betrieb und ein geringerer Verschleiß bereitgestellt werden.

Die Aufgabe wird durch eine landwirtschaftliche Quaderballenpresse mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die erfindungsgemäße landwirtschaftliche Quaderballenpresse zur Verarbeitung von Erntegut zu quaderförmigen Ballen umfasst einen Antriebsstrang zur Verarbeitung einer von einem Nebenantrieb eines Traktors bereitgestellten Antriebsleistung. Außerdem umfasst die im Folgenden einfach Quaderballenpresse genannte landwirtschaftliche Quaderballenpresse eine Mehrzahl von Arbeitsorganen zur Verarbeitung des Ernteguts. Hierbei kann es sich entsprechend vorstehender Erläuterungen insbesondere um eine Pickup, einen Raffer, einen Hauptverdichterkolben und eine Bindeeinrichtung handeln. Der Antriebsstrang weist mindestens einen Energiespeicher in Form eines Schwungrades auf, mittels dessen in der beschriebenen Weise Drehmomentspitzen überwunden werden können. Außerdem umfasst der Antriebsstrang ein Pressenhauptgetriebe, mittels dessen die Antriebsleistung an die Arbeitsorgane übertragbar ist. Erfindungsgemäß weist der Antriebsstrang mindestens eine Drehmoment nach dem Föttingerprinzip übertragende Flüssigkeitskupplung auf, wobei die Flüssigkeitskupplung dem Schwungrad zugeordnet ist. Insbesondere kann die Flüssigkeitskupplung in Richtung des Leistungsflusses betrachtet unmittelbar vor oder unmittelbar nach dem Schwungrad angeordnet sein.

Die erfindungsgemäße Quaderballenpresse hat viele Vorteile. Insbesondere ermöglicht die Flüssigkeitskupplung eine bedarfsweise Aus- oder Einkupplung der ihr in Richtung des Leistungsflusses betrachtet nachgeschalteten Teile des Antriebsstrangs der Quaderballenpresse. Insbesondere kann ein verzögertes Zuschalten in Richtung des Leistungsflusses nachgeschalteter Arbeitsorgane stattfinden. Dies ermöglicht es beispielsweise bei einem Start der Quaderballenpresse, dass die Arbeitsmaschine zunächst ein Drehmoment an dem Nebenantrieb der Arbeitsmaschine aufbauen kann, bevor eine Übertragung an Teile des Antriebsstrangs oder den ganzen Antriebsstrang der Quaderballenpresse stattfindet. Auf diese Weise ermöglicht die erfindungsgemäße Quaderballenpresse einen besonders sicheren Betrieb und einen besonders geringen Verschleiß.

Bei einer üblichen landwirtschaftlichen Anwendung, beispielsweise bei einer Bestellung eines Feldes, kann die Quaderballenpresse beispielsweise von einer landwirtschaftlichen Arbeitsmaschine, insbesondere einem Traktor, gezogen und angetrieben werden. Die Arbeitsmaschine weist einen Nebenantrieb, die sogenannte Power-take-off (PTO), auf, mittels der die Antriebsleistung an Anbaugeräte bereitstellbar ist. Der Nebenantrieb ist mit dem Antriebsstrang der Quaderballenpresse verbunden, beispielsweise mittels einer Kupplung, insbesondere einer Kardankupplung. Mit anderen Worten stellt die Arbeitsmaschine die Antriebsleistung bereit und überträgt selbige an die Quaderballenpresse, insbesondere deren Antriebsstrang. Wieder mit anderen Worten treibt der Nebenantrieb der Arbeitsmaschine zumindest mittelbar den Antriebsstrang der Quaderballenpresse an.

Der Betrieb der landwirtschaftlichen Quaderballenpresse kann insbesondere bei einer Drehzahl des Antriebsstranges von ca. 1000 U/min erfolgen. Der Nebenantrieb der Arbeitsmaschine kann Drehzahlschwankungen von beispielsweise 5% aufweisen, die beispielsweise durch schwankende Last oder ein Beschleunigen beziehungsweise Abbremsen eines Motors der Arbeitsmaschine verursacht werden. Die Flüssigkeitskupplung kann dazu geeignet sein, die Drehzahlschwankungen auf im Wesentlichen bis zu 10% zu verstärken, wobei die Drehzahlschwankungen ausschließlich am Antriebsstrang der landwirtschaftlichen Quaderballenpresse auftreten. Drehzahlschwankungen des Nebenantriebs werden reduziert. Um die einzelnen Arbeitsorgane nicht in einer jeweiligen Funktion zu beeinträchtigen, ist es von Vorteil, wenn die Drehzahlschwankung auf der Seite der Quaderballenpresse 10% nicht übersteigen.

Vorteilhafterweise umfasst die Flüssigkeitskupplung im Wesentlichen vier Bauteile: Die Flüssigkeitskupplung weist ein antriebsseitiges Pumpenrad auf. Außerdem umfasst die Flüssigkeitskupplung ein abtriebsseitiges Turbinenrad, das mit einer Welle verbunden sein kann. Des Weiteren weist die Flüssigkeitskupplung einen Gehäusedeckel auf, der mit dem Pumpenrad verbunden ist und das Turbinenrad umschließt. Der Gehäusedeckel kann beispielsweise mittels einer Schraubverbindung mit dem Pumpenrad verbunden sein. Außerdem ist die Flüssigkeitskupplung mit einem Fluid, insbesondere einem Öl, befüllt, derart, dass in einem Stillstand im Wesentlichen das Pumpenrad gefüllt ist.

Die Flüssigkeitskupplung überträgt das Drehmoment nicht mechanisch, sondern gemäß dem Föttingerprinzip. Mit anderen Worten besteht kein direkter mechanischer Kontakt zwischen dem Pumpenrad und dem Turbinenrad. Das Pumpenrad und das Turbinenrad weisen jeweils mindestens zwei, insbesondere eine Mehrzahl, von zueinander beabstandeten Lamellen auf. Die Lamellen sind in ihrer Längsausdehnung in radialer Richtung angeordnet. Wird das antriebsseitige Pumpenrad vom Stillstand beschleunigt, wird das Öl durch die Zentrifugalkraft in radialer Richtung nach außen beschleunigt. Dadurch steigt ein Pegel des Öls an, derart, dass das Öl in axialer Richtung in Richtung des Turbinenrads bewegt wird.

Das Öl kommt im Turbinenrad in Eingriff mit den Lamellen, sodass eine Kraftübertragung von dem Öl auf die Lamelle und somit das Turbinenrad erfolgt. Mit anderen Worten findet eine Kraftübertragung zwischen dem Pumpenrad und dem Turbinenrad mittels des Öls statt, derart, dass eine Kraft von der Lamelle des Pumpenrades auf das Öl und von dem Öl auf die Lamelle des Turbinenrades übertragen wird. Das Pumpenrad kann desto mehr Drehmoment an das Turbinenrad übertragen, je höher die Drehzahl und dadurch der Pegel des Öls ist. Vorteilhafterweise erfolgt mittels der Flüssigkeitskupplung die Kraftübertragung verschleißfrei.

Die Flüssigkeitskupplung kann an verschiedenen Positionen des Antriebsstranges angeordnet sein. Der Antriebsstrang ist in einer Ausführungsform der Erfindung gemäß einer Flussrichtung der Antriebsleistung wie folgt aufgebaut: Der antriebseitig angeordneten Welle, insbesondere Kardanwelle, die mit dem Nebenantrieb verbunden ist, folgt in Flussrichtung der Antriebsleistung ein Getriebe, welches die Antriebsleistung an eine weitere Welle, insbesondere eine weitere Kardanwelle überträgt. Die Welle und die weitere Welle können in jeweiliger axialer Richtung in einem Winkel zueinander stehen. Mit anderen Worten handelt es sich bei einem solchen Getriebe um ein Winkelgetriebe. Außerdem umfasst der Antriebsstrang eine dritte Welle, insbesondere Kardanwelle, die mit der weiteren Welle verbunden ist. Das Schwungrad ist auf der dritten Welle angeordnet. Außerdem umfasst die Quaderballenpresse ein Pressenhauptgetriebe, das in Flussrichtung der Antriebsleistung dem Schwungrad nachgeschaltet ist.

Erfindungsgemäß kann die Flüssigkeitskupplung in Flussrichtung der Antriebsleistung betrachtet dem Schwungrad vorgeschaltet sein. Vorteilhafterweise ist hierbei eine Implementierung besonders einfach. Die Flüssigkeitskupplung ist mit der weiteren Welle zumindest mittelbar mit dem Pressenhauptgetriebe verbunden. Der Nebenantrieb kann ohne die Last der Quaderballenpresse (inklusive des Schwungrads) gestartet werden und so das Drehmoment aufbauen, bis selbiges ausreicht, um die Quaderballenpresse zu starten. Die Zuschaltung der Quaderballenpresse erfolgt dabei über die Einkupplung der Flüssigkeitskupplung. Im vorliegenden Fall ist der Überlastschutz, der beispielsweise bei 2600 Nm liegen kann, nicht notwendig, da die Flüssigkeitskupplung diese Funktion mit übernimmt.

In einer weiteren vorteilhaften Ausführungsform weist der Antriebsstrang mindestens einen Drehmomentbegrenzer auf, wobei vorzugsweise der Drehmomentbegrenzer in Flussrichtung der Antriebsleistung betrachtet dem Schwungrad nachgeschaltet ist. Vorteilhafterweise ist durch den mindestens einen Drehmomentbegrenzer ein besonders sicherer Betrieb bereitgestellt.

Erfindungsgemäß kann die Flüssigkeitskupplung alternativ in Flussrichtung der Antriebsleistung betrachtet dem Schwungrad nachgeschaltet sein. Hierbei beschleunigt der Nebenantrieb ab dem Start der Arbeitsmaschine zunächst das Schwungrad, insbesondere bei niedriger Drehzahl. Erreicht die Drehzahl der Welle mitsamt dem Schwungrad einen bestimmten Wert, wird die Flüssigkeitskupplung geschlossen. Das Drehmoment der PTO zusammen mit dem aufgebauten Drehmoment des Schwungrades sind besonders gut dazu geeignet, die nachgeschalteten Arbeitsorgane zu betreiben, insbesondere etwaige Lastspitzen zu überwinden und auf diese Weise die Quaderballenpresse sicher zu starten. Der Wert der Drehzahl, zu dem die Flüssigkeitskupplung geschlossen werden soll, kann beispielsweise von Kennzahlen des Nebenantriebs abhängen. Vorteilhafterweise ist durch die dem Schwungrad nachgeschaltete Flüssigkeitskupplung ein besonders kraftvoller Betrieb möglich. Es ist insbesondere vergleichsweise gut möglich, die Quaderballenpresse nach einem Betriebsstopp, der beispielsweise durch einen Nothalt verursacht wurde, erneut zu starten. Dies ist dem Stand der Technik zufolge bisher nicht immer möglich, da das dafür benötigte Drehmoment zumindest üblicherweise nicht von dem Nebenantrieb bereitgestellt werden kann. Dies hängt auch damit zusammen, dass ein Nothalt einer Quaderballenpresse oftmals im Moment eines maximalen anliegenden Drehmoments auftritt, das die Arbeitsmaschine nicht überwinden konnte und daher "abgewürgt" wurde. Ein Neustart aus dieser Position ist ohne aufwendige Vorarbeit kaum möglich. Die erfindungsgemäße Quaderballenpresse kann einen solchen Punkt vermeiden, indem über die Flüssigkeitskupplung zumindest die Arbeitsorgane ausgekuppelt und damit das Drehmoment, das zum Start der Quaderballenpresse aufgewendet werden muss, stark reduziert werden können. Ein weiterer Vorteil ist, dass die Implementierung der Flüssigkeitskupplung besonders einfach ist, da selbige ohne ein Verschieben des Schwungrades möglich ist.

In einer weiteren vorteilhaften Ausführungsform umfasst der Antriebsstrang mindestens zwei Drehmomentbegrenzer, wobei die Flüssigkeitskupplung in Flussrichtung der Antriebsleistung betrachtet zwischen den Drehmomentbegrenzern angeordnet ist. Hierbei dreht das Schwungrad frei auf der dritten Welle. Mit anderen Worten ist eine Verbindung zwischen der dritten Wellen und der weiteren Welle ausschließlich über die Flüssigkeitskupplung hergestellt. Hierdurch ergibt sich der Vorteil, dass ein besonders sicherer Betrieb möglich ist.

In einer weiteren vorteilhaften Ausführungsform ist die Flüssigkeitskupplung räumlich zwischen einem ersten Drehmomentbegrenzer und dem Schwungrad angeordnet. Auf diese Weise ist die Flüssigkeitskupplung besonders einfach in den Antriebsstrang der Quaderballenpresse integrierbar.

Mit anderen Worten, in einer Ausführungsform ist die Flüssigkeitskupplung räumlich vor dem Schwungrad angeordnet, das Schwungrad ist jedoch mechanisch mit der Antriebsseite der Flüssigkeitskupplung und die Abtriebsseite der Flüssigkeitskupplung mit einem zweiten Drehmomentbegrenzer verbunden, der wiederum mit dem Eingang des Pressenhauptgetriebes verbunden ist.

In einer weiteren vorteilhaften Ausführungsform ist die Flüssigkeitskupplung dazu eingerichtet ist, das Pressenhauptgetriebe mit einer mit einer Drehzahl von mindestens 900 U/mm, vorzugsweise mindestens 950 U/mm, weiter vorzugsweise mindestens 980 U/mm, anzutreiben.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren allein gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Erfindung ist nachstehend anhand eines Ausführungsbeispiels, das in den Figuren dargestellt ist, näher erläutert. Es zeigt:
- Fig. 1:: eine schematische Ansicht eines Traktors mit einer daran angehängten Ballenpresse;
- Fig. 2:: eine Prinzipskizze eines Antriebsstranges einer konventionellen Quaderballenpresse;
- Fig. 3:: eine perspektivische Ansicht des Antriebsstranges einer erfindungsgemäßen Quaderballenpresse gemäß einer ersten Ausgestaltung;
- Fig. 4:: eine Prinzipskizze eines Antriebsstranges einer erfindungsgemäßen Quaderballenpresse gemäß einer zweiten Ausgestaltung; und
- Fig. 5:: eine perspektivische Ansicht des Antriebsstranges einer erfindungsgemäßen Quaderballenpresse gemäß der zweiten Ausgestaltung.

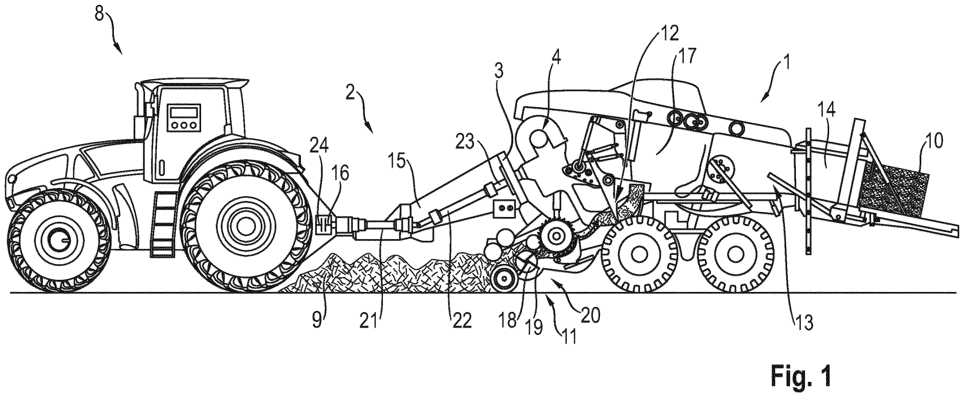

Eine Quaderballenpresse **1** gemäß dem Stand der Technik ist in **Figur 1** dargestellt. Die Quaderballenpresse **1** kann eine Höhe von beispielsweise 2,5 m und eine Breite von beispielsweise 3,0 m aufweisen. Außerdem kann die Quaderballenpresse **1** ohne weitere Anbauten ein Gewicht von beispielsweise 7 t aufweisen. Die Quaderballenpresse **1** kann von einer landwirtschaftlichen Arbeitsmaschine, insbesondere einem Traktor **8** gezogen werden. Der Traktor **8** weist einen Nebenantrieb **16**, die sogenannte Power-take-off (PTO), auf, mittels der eine Antriebsleistung an Anbaugeräte bereitstellbar ist. Die Quaderballenpresse **1** kann beispielsweise mittels einer Anhängerkupplung, die aus Gründen der Übersichtlichkeit nicht dargestellt ist, mit dem Traktor **8** verbunden sein. Der Traktor **8** und die Quaderballenpresse **1** befahren somit gemeinsam ein zu bestellendes Feld, auf dem restliches Erntegut **9**, wie beispielsweise Heu oder Stroh lose aufliegt. Es ist unwirtschaftlich, das Erntegut **9** in seinem losen Zustand aufzunehmen, zu transportieren beziehungsweise zu lagern, da das lose Erntegut **9** eine geringe Dichte aufweist und somit ein großes Volumen einnimmt. Aus wirtschaftlicher Sicht ist es daher vorteilhaft, das Erntegut **9** zunächst zu verdichten, insbesondere zu Ballen **10** zu pressen. Diese Aufgabe bewerkstelligt die Quaderballenpresse **1**, die dafür mehrere Arbeitsorgane aufweist.

Im Folgenden beschriebene Merkmale der Quaderballenpresse **1** gemäß dem Stand der Technik, wie in **Figur 1** dargestellt, treffen gleichermaßen auf eine erfindungsgemäße Quaderballenpresse 1 zu.

Die Quaderballenpresse **1** umfasst einen Antriebsstrang **2** zur Verarbeitung der Antriebsleistung. Der Antriebsstrang **2** weist mindestens einen Energiespeicher, beispielsweise in Form eines Schwungrades **3** auf, mittels dessen Drehmomentspitzen überwunden werden können. Der Nebenantrieb **16** des Traktors **8** ist mit dem Antriebsstrang **2** verbunden, beispielsweise mittels einer Kupplung **24**, die beispielsweise eine Kardankupplung sein kann. Demzufolge ist der Nebenantrieb **16** des Traktors **8** mit dem Antriebsstrang **2** der Quaderballenpresse **1** wirkverbunden, derart, dass der Traktor **8** die Antriebsleistung bereitstellt und selbige an die Quaderballenpresse **1** überträgt.

Die Quaderballenpresse **1** umfasst eine Pickup **11**, die einen Rotor **18** mit einer Vielzahl von Zähnen **19** aufweist. Vorliegend ist zwischen den Zähnen **19** ein Schneidwerk **20** angeordnet, welches eine Vielzahl von Messern aufweist. Mittels der Pickup **11** kann das lose Erntegut **9** vom Feld aufgenommen werden. Die Pickup **11** kann eine Breite von beispielsweise 2,10 m aufweisen.

Außerdem umfasst die Quaderballenpresse **1** einen Raffer **12**, welcher der Pickup **11** nachgeschaltet ist. Der Raffer **12** führt das Erntegut **9** einer Vorkammer **17** zu, beispielsweise mittels eines Rechens. In der Vorkammer **17** verdichtet der Raffer **12** das Erntegut **9** vor und führt es anschließend einer Kammer **14** zu, derart, dass sukzessive einzelne, vorverdichtete Erntegutpakete zugeführt werden.

Die vorverdichteten Erntegutpakete werden in einer Komprimiereinrichtung **13** in ihre endgültige Quaderform gepresst. In der quaderförmigen Kammer **14**, deren Längsausdehnung sich in Längsrichtung der Quaderballenpresse **1** erstreckt, der Komprimiereinrichtung **13** wird ein Hauptverdichterkolben entlang der Längsausdehnung der Kammer **14** zyklisch hin und her bewegt. Beispielsweise wird der Hauptverdichterkolben mit 50 Hüben pro Minute bewegt. Die Kammer **14** kann beispielsweise eine Länge von beispielsweise 3,00 m und eine Breite von beispielsweise 1,20 m aufweisen. Da der Hauptverdichterkolben in der Kammer **14** vorzugsweise über die gesamte Längsausdehnung der Kammer **14** bewegt wird und einen Querschnitt aufweist, der vorzugsweise im Wesentlichen einem Querschnitt der Kammer **14** entspricht, sind Quaderballen **10** mit einer Länge von beispielsweise 3,00 m und einer Breite von beispielsweise 1,20 m möglich. Der Hauptverdichterkolben ist in **Figur 1** aus Gründen der Übersichtlichkeit nicht dargestellt. Der Hauptverdichterkolben erfasst die Erntegutpakete und schiebt selbige entlang der Längsausdehung vor sich her und presst die Erntegutpakete gegen das bereits verdichtete Erntegut **9**, das bereit als Quader **10** an einem Austritt der Kammer **14** vorliegt.

Das Erntegut verlässt die Kammer **14** im Wesentlichen in Form eines Quaders. Um den Quader nach Verlassen der Quaderballenpresse in Form zu halten, ist der Kammer eine Bindeeinrichtung nachgeschaltet, mittels der ein Garn um den Quader 10 gelegt und verknotet wird. Die Bindeeinrichtung ist in **Figur 1** aus Gründen der Übersichtlichkeit nicht dargestellt.

Um die Quaderballenpresse **1** zu starten, ist es notwendig, das Schwungrad **3** aus einem Stillstand heraus zu beschleunigen. Außerdem muss ein ausreichendes Drehmoment durch den Nebenantrieb **16** des Traktors **8** aufgebracht werden, um alle Arbeitsorgane der Quaderballenpresse 1, beispielsweise, die Pickup **11**, den Raffer **12**, die Komprimiereinrichtung **13**, und die Bindeeinrichtung zu starten. Dies kann dazu führen, dass der Traktor **8** besonders leistungsstark sein muss.

Mittels einer Flüssigkeitskupplung **5** kann die Quaderballenpresse **1** auch von weniger leistungsstarken Arbeitsmaschinen gestartet werden. Die Flüssigkeitskupplung **5** überträgt das Drehmoment gemäß dem Föttingerprinzip. Hierbei besteht kein mechanischer Kontakt zwischen kraftübertragenden Bauteilen der Flüssigkeitskupplung **5.** Die Flüssigkeitskupplung **5** umfasst ein antriebsseitiges Pumpenrad und ein abtriebsseitiges Turbinenrad, welche jeweils eine Mehrzahl von Lamellen aufweisen. Außerdem ist die Flüssigkeitskupplung **5** mit einem Fluid befüllt, beispielsweise Öl. Durch Beschleunigen des antriebsseitigen Pumpenrades steigt ein Pegel des Öls infolge der Zentrifugalkraft und kommt somit in Eingriff mit den Lamellen des Turbinenrades. Somit erfolgt eine Kraftübertragung von den Lamellen des Pumpenrades auf das Öl und vom Öl auf die Lamellen des Turbinenrades. Mit anderen Worten überträgt das Pumpenrad zumindest mittelbar Kraft an das Turbinenrad. Da mit steigender Drehzahl die Zentrifugalkraft stärker wird und somit der Pegel steigt, wird auch das übertragbare Drehmoment größer.

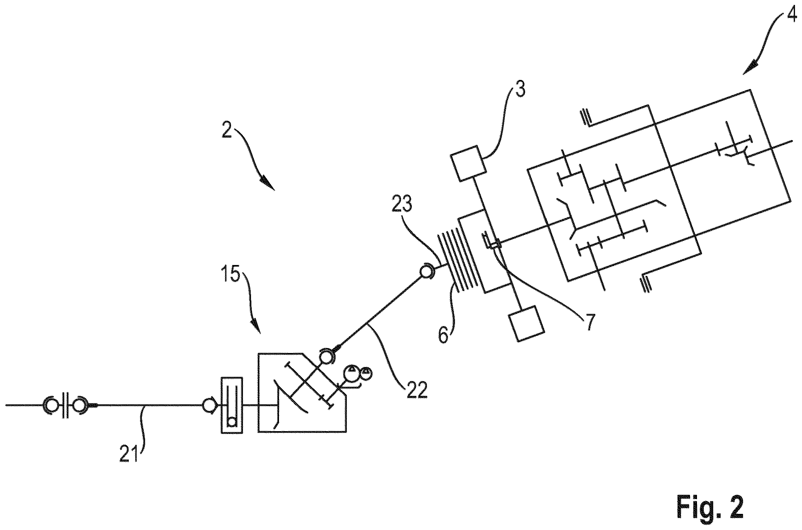

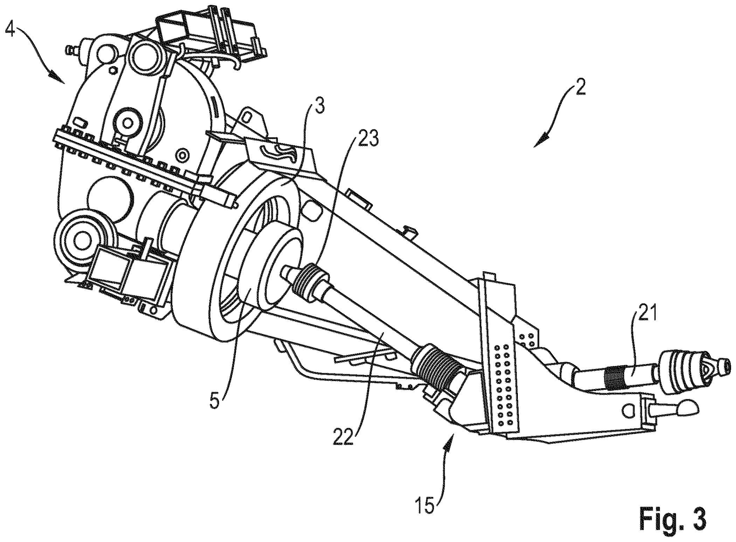

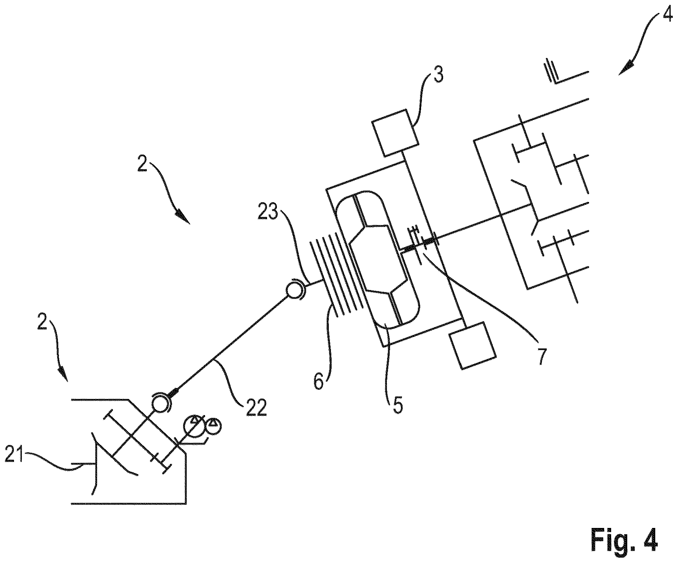

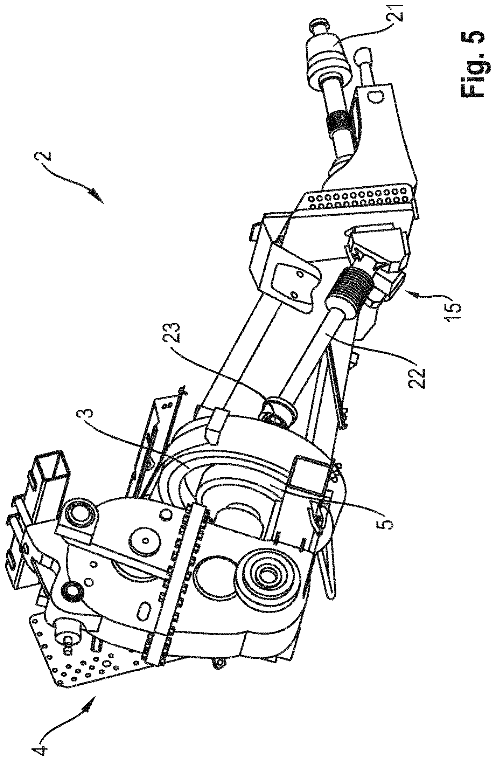

Folgende Erläuterungen sind anhand von den Prinzipskizzen **Figur 2** sowie **Figur 4** und von den schematischen Skizzen **Figur 3** sowie **Figur 5** nachvollziehbar. Der Antriebsstrang umfasst eine erste Welle **21,** die mit dem Nebenantrieb **16** verbindbar beziehungsweise verbunden ist, beispielsweise mittels der Kardankupplung. Die erste Welle **21** ist mittels eines Winkelgetriebes **15** mit einer weiteren Welle **22** verbunden, die wiederum mit einer dritten Welle **23** verbunden ist. Die dritte Welle **23** ist mit einem Pressenhauptgetriebe **4** verbunden, mittels dessen die Antriebsleistung an die Arbeitsorgane übertragen werden kann. Das Schwungrad **3** ist auf der dritten Welle **23** angeordnet, wie **Figur 3** sowie **Figur 5** zeigen. Zusätzlich kann ein Drehmomentbegrenzer **6, 7** auf der dritten Welle **23** angeordnet sein, wie **Figur 2** beziehungsweise **Figur 4** zeigen.

Die Flüssigkeitskupplung **5** kann entweder, wie in **Figur 3** gezeigt, in Flussrichtung der Antriebsleistung vor dem Schwungrad **3** oder, wie in **Figur 5** gezeigt, in Flussrichtung der Antriebsleistung nach dem Schwungrad **3** angeordnet sein.

Eine Kraftübertragung mittels der Flüssigkeitskupplung **5** erfolgt mit einem Schließen derselben. Hieraus ergeben sich entsprechend der **Figur 3** beziehungsweise **Figur 5** zwei verschiedene Anwendungsfälle. Wenn die Flüssigkeitskupplung **5** dem Schwungrad **3** in Flussrichtung der Antriebleistung vorher angeordnet ist, wie in **Figur 3** dargestellt, wird das Schwungrad **3** erst mit Schließen der Flüssigkeitskupplung **5** beschleunigt. Da das Drehmoment der Flüssigkeitskupplung **5** mit zunehmender Drehzahl steigt, kann die Flüssigkeitskupplung **5** gewissermaßen Drehmoment aufbauen, bis selbiges ausreichend ist, um das Schwungrad **3,** insbesondere aus dem Stillstand, zu beschleunigen.

Eine andere Ausgestaltung, wie in **Figur 4** oder **Figur 5** gezeigt, sieht vor, die Flüssigkeitskupplung **5** in Flussrichtung der Antriebsleistung nach dem Schwungrad **3** anzuordnen. Demzufolge wird das Schwungrad **3** aus dem Stillstand beschleunigt. Durch Schließen der Flüssigkeitskupplung **5** kann anschließend das Pressenhauptgetriebe **4** zugeschaltet werden, wodurch die einzelnen Arbeitsorgane angetrieben werden.

### Bezugszeichenliste

- 1: Quaderballenpresse
- 2: Antriebsstrang
- 3: Schwungrad
- 4: Pressenhauptgetriebe
- 5: Flüssigkeitskupplung
- 6: Drehmomentbegrenzer
- 7: Drehmomentbegrenzer
- 8: Traktor
- 9: loses Erntegut
- 10: Quaderballen
- 11: Pickup
- 12: Raffer
- 13: Komprimiereinrichtung
- 14: Kammer
- 15: Winkelgetriebe
- 16: Nebenantrieb
- 17: Vorkammer
- 18: Rotor
- 19: Zähne
- 20: Schneidwerk
- 21: Welle
- 22: weitere Welle
- 23: dritte Welle
- 24: Kupplung

## Patentansprüche

1. Landwirtschaftliche Quaderballenpresse (1) zur Verarbeitung von Erntegut (9) zu quaderförmigen Ballen(10), umfassend
- einen Antriebsstrang (2) zur Verarbeitung einer von einem Nebenantrieb (16) eines Traktors (8) bereitgestellten Antriebsleistung sowie
- eine Mehrzahl von Arbeitsorganen zur Verarbeitung des Ernteguts (9),
wobei der Antriebsstrang (2) mindestens einen Energiespeicher in Form eines Schwungrades (3) aufweist,
wobei der Antriebsstrang (2) ein Pressenhauptgetriebe (4) aufweist, mittels dessen die Antriebsleistung auf die Arbeitsorgane übertragbar ist,
**dadurch gekennzeichnet, dass**
der Antriebsstrang (2) mindestens eine Drehmoment nach dem Föttingerprinzip übertragende Flüssigkeitskupplung (5) aufweist,
wobei die Flüssigkeitskupplung (5) dem Schwungrad (4) zugeordnet ist,
wobei die Flüssigkeitskupplung (5) in Flussrichtung der Antriebsleistung betrachtet dem Schwungrad (3) vorgeschaltet ist oder die Flüssigkeitskupplung (5) in Flussrichtung der Antriebsleistung betrachtet dem Schwungrad (3) nachgeschaltet ist.

2. Quaderballenpresse (1) nach Anspruch 1, **dadurch gekennzeichnet, dass** der Antriebsstrang (2) mindestens einen Drehmomentbegrenzer (6) aufweist, wobei vorzugsweise der Drehmomentbegrenzer (6) in Flussrichtung der Antriebsleistung betrachtet dem Schwungrad (3) nachgeschaltet ist.

3. Quaderballenpresse (1) nach Anspruch 1 oder 2, **dadurch gekennzeichnet, dass** der Antriebsstrang (2) mindestens zwei Drehmomentbegrenzer (6, 7) aufweist, wobei die Flüssigkeitskupplung (5) in Flussrichtung der Antriebsleistung betrachtet zwischen den Drehmomentbegrenzern (6, 7) angeordnet ist.

4. Quaderballenpresse (1) nach einem der vorhergehenden Ansprüche, **dadurch gekennzeichnet, dass** die Flüssigkeitskupplung (5) räumlich zwischen einem ersten Drehmomentbegrenzer (6) und dem Schwungrad (3) angeordnet ist.

5. Quaderballenpresse (1) nach einem der vorhergehenden Ansprüche, **dadurch gekennzeichnet, dass** die Flüssigkeitskupplung (5) dazu eingerichtet ist, das Pressenhauptgetriebe (4) mit einer Drehzahl von mindestens 900 U/mm, vorzugsweise mindestens 950 U/mm, weiter vorzugsweise mindestens 980 U/mm, anzutreiben.

## Claims

1. An agricultural square baler (1) for working harvested material (9) into square bales (10), comprising
- a drive train (2) for working drive power provided from an auxiliary drive (16) of a tractor (8), as well as
- a plurality of working units for working the harvested material (9),
wherein the drive train (2) has at least one energy storage means in the form of a flywheel (3),
wherein the drive train (2) has a main baler transmission (4) by means of which the drive power can be transmitted to the working units,
**characterized in that**
the drive train (2) has at least one fluid coupling (5) which transmits a torque in accordance with the Föttinger principle, wherein the fluid coupling (5) is associated with the flywheel (4), wherein, considered in the direction of flow of the drive power, the fluid coupling (5) is upstream of the flywheel (3) or, considered in the direction of flow of the drive power, the fluid coupling (5) is downstream of the flywheel (3).

2. The square baler (1) according to claim 1, **characterized in that** the drive train (2) has at least one torque limiter (6), wherein preferably, the torque limiter (6) is downstream of the flywheel (3) considered in the direction of flow of the drive power.

3. The square baler (1) according to claim 1 or claim 2,
**characterized in that** the drive train (2) has at least two torque limiters (6, 7), wherein the fluid coupling (5) is disposed between the torque limiters (6, 7) considered in the direction of flow of the drive power.

4. The square baler (1) according to one of the preceding claims, **characterized in that** the fluid coupling (5) is spatially disposed between a first torque limiter (6) and the flywheel (3).

5. The square baler (1) according to one of the preceding claims, **characterized in that** the fluid coupling (5) is configured to drive the main baler transmission (4) at a rotary speed of at least 900 rpm, preferably at least 950 rpm, more preferably at least 980 rpm.

## Revendications

1. Presse agricole à balles parallélépipédiques (1) destinée au traitement de produits récoltés (9) pour obtenir des balles parallélépipédiques (10), comprenant
- une chaîne cinématique (2) destinée au traitement d'une puissance d'entraînement fournie par un moyen d'entraînement auxiliaire (16) d'un tracteur (8), ainsi que
- une pluralité d'organes de travail destinés au traitement de la récolte (9), la chaîne cinématique (2) présentant au moins un accumulateur d'énergie sous la forme d'un volant d'inertie (3),
la chaîne cinématique (2) présentant une transmission principale de presse (4) au moyen de laquelle la puissance d'entraînement peut être transmise aux organes de travail,
**caractérisée en ce que**
la chaîne cinématique (2) présente au moins un accouplement fluide (5) transmettant les couples selon le principe de Föttinger,
l'accouplement fluide (5) étant associé au volant d'inertie (4),
l'accouplement fluide (5) étant placé en amont du volant d'inertie (3), vu dans le sens du flux de la puissance d'entraînement, ou l'accouplement fluide (5) étant placé en aval du volant d'inertie (3), vue dans le sens du flux de la puissance d'entraînement.

2. Presse à balles parallélépipédiques (1) selon la revendication 1, **caractérisée en ce que** la chaîne cinématique (2) présente au moins un limiteur de couple (6), le limiteur de couple (6) étant de préférence placé en aval du volant d'inertie (3), vu dans le sens du flux de la puissance d'entraînement.

3. Presse à balles parallélépipédiques (1) selon la revendication 1 ou 2, **caractérisée en ce que** la chaîne cinématique (2) présente au moins deux limiteurs de couple (6, 7), l'accouplement fluide (5) étant de préférence placé entre les limiteurs de couple (6, 7), vu dans le sens du flux de la puissance d'entraînement.

4. Presse à balles parallélépipédiques (1) selon une des revendications précédentes, **caractérisée en ce que** l'accouplement fluide (5) est disposé dans l'espace entre un premier limiteur de couple (6) et le volant d'inertie (3).

5. Presse à balles parallélépipédiques (1) selon une des revendications précédentes, **caractérisée en ce que** l'accouplement fluide (5) est conçu pour entraîner la transmission principale de presse (4) à une vitesse de rotation d'au moins 900 tr/mm, de préférence d'au moins 950 tr/mm, et de manière particulièrement avantageuse de préférence d'au moins 980 tr/mm.
